# EUROPÄISCHE PATENTSCHRIFT

(11) **EP 2 190 624 B1**
(45) Veröffentlichungstag und Bekanntmachung des Hinweises auf die Patenterteilung: **19.01.2011**
(21) Anmeldenummer: 08802101.9
(22) Anmeldetag: 12.09.2008
(51) Int. Cl.: B23P 19/02

(54) **RADSATZPRESSE**
WHEELSET PRESS
PRESSE POUR JEUX DE ROUES

(30) Priorität: 21.09.2007 DE 202007013329 U
(43) Veröffentlichungstag der Anmeldung: 02.06.2010
(73) Patentinhaber: Mae Maschinen- Und Apparatebau Götzen Gmbh&Co. Kg, 40699 Erkrath (DE)
(72) Erfinder: MITZE, Manfred, 58300 Wetter (DE)
(74) Vertreter: GROSSE SCHUMACHER KNAUER VON HIRSCHHAUSEN
(86) Internationale Anmeldenummer: PCT/EP2008/007547
(87) Internationale Veröffentlichungsnummer: WO 2009/039997

(56) Entgegenhaltungen:
- EP-A- 1 201 350
- CN-Y- 2 644 075
- GB-A- 599 034
- JP-A- 9 156 302

## Beschreibung

Die Erfindung betrifft eine Radsatzpresse zum Aus- oder Abpressen von Rädern, Bremsscheiben oder dergleichen auf Radsatzwellen von Schienenfahrzeugen der dem Oberbegriff des Anspruchs 1 entsprechenden Art. Demnach sind zwei auf einer gemeinsamen Geraden feststehend angeordnete, gegeneinander gerichtete Kolbenzylindereinheiten zur Ausübung des notwendigen Pressdrucks und, gegebenenfalls, zur Verlagerung der Radsatzwelle in Längsrichtung der Radsatzwelle, zur Bewirkung des Auf- oder Abpressvorgangs vorgesehen. Die Radsatzwelle wird von einer geeigneten Einrichtung der Radsatzpresse während des Pressvorganges aufgenommen, wie von zwei einander gegenüberliegenden Zentrierspitzen, wobei jede Zentrierspitze in eine am jeweils zugewandten Achsende vorgesehene Zentrierbohrung einführbar ist und Mittel vorgesehen sind, mit denen der Abstand der Zentrierspitzen zu einander veränderbar ist. Zur Übertragung der Presskraft auf das zugewandte Ende der Radsatzwelle sind Druckstempel an den Kolbenzylindereinheiten vorgesehen. Mindestens ein Presswiderlager zum Abstützen eines Rades, einer Bremse oder dergleichen während des Pressvorganges ist derart ausgestaltet, dass es durch eine Relativbewegung zur Radsatzwelle quer zu deren Längsrichtung in seine Abstützstellung bringbar ist, und es sich ansonsten außerhalb des Pressbereiches befindet. Das Presswiderlager ist entlang der Radsatzwelle in verschiedenen Positionen festlegbar. Die Kolbenzylindereinheiten und das Presswiderlager sind in einem Pressgestell aus so genannten Pressholmen und dazwischen fest angeordneten Verbindungssäulen angeordnet.

### TECHNOLOGISCHER HINTERGRUND

Das sichere Fügen von Radscheiben, Bremsscheiben oder dergleichen einerseits und einer Radsatzwelle andererseits, die im montierten Zustand drehbar an einem Schienenfahrzeug gelagert ist, ist für den zuverlässigen Betrieb letzteres von herausragender Bedeutung. Weil die Räder in den meisten Fällen ausschließlich durch Reibschluss auf der Radsatzwelle fixiert werden, muss zwischen Radbohrung und Wellen-Außendurchmesser eine Presspassung vorhanden sein. Der Montagevorgang neuer oder überarbeiteter Radscheiben, Bremsscheiben oder dergleichen auf der Radsatzwelle sowie der Demontagevorgang derselben nach Erreichen der Verschleißgrenze von der Radsatzwelle erfordert daher hohe Kräfte im Bereich von 800 bis 2500 kN.

Wenn im folgenden von "Radsatz" die Rede ist, so ist hiermit die Radsatzwelle mit sämtlichen aufzupressenden Bauteilen, wie Radscheiben, Bremsscheiben oder dergleichen, gemeint. Unter "Fügen" sei sowohl das Zusammenfügen der Bauteile, mit anderen Worten: Das Aufpressen der Radscheiben, Bremsscheiben oder dergleichen auf die Radsatzwelle, als auch das Abpressen dieser Bauteile von der Radsatzwelle gemeint.

Hydraulische Pressen haben die Fähigkeit, große Kräfte über lange Hübe hinweg aufbringen zu können; sie sind daher für das Fügen von Radsätzen optimal geeignet. Schon gegen Ende des Neunzehnten Jahrhunderts wurden hydraulisch betriebene Radsatzpressen mit Erfolg eingesetzt. Die bislang bekannt gewordenen Radsatzpressen stimmen in ihrem prinzipiellen Aufbau und in ihrer Wirkungsweise untereinander und mit denjenigen, die gegen Ende des Neunzehnten Jahrhunderts eingesetzt wurden, im Wesentlichen überein. Beispielhaft sei auf eine Radsatzpresse der Firma Hoesch Maschinenfabrik Deutschland AG der Serie PR verwiesen. Sie ist als horizontal angeordnete, mit einem ölhydraulisch angetriebenen Hochdruckzylinder ausgestattete Zweisäulenpresse ausgeführt. Der Hochdruckzylinder ist in einem seitlichen Zylinderholm installiert, in dem des Weiteren die beiden Säulen an einem Ende fixiert sind. Der Lagerung der anderen Enden der Säulen dient eine Endtraverse, die - wie auch der Zylinderholm - mit einem Flansch zur Befestigung der Radsatzpresse am Boden ausgestattet ist. Mit ihren oberen Enden tragen der Zylinderholm und die Endtraverse oftmals eine sich im Wesentlichen parallel zu den Säulen erstreckende Brückenkrananordnung.

Beide Säulen, die in dem Zylinderholm und in der Endtraverse drehbar gelagert sind, weisen über ihre freie Länge zwischen dem Zylinderholm und der Endtraverse jeweils ein Spindelgewinde auf. Dieses dient der Verlagerung eines als Widerlager dienenden, C-förmigen Laufholms, welcher drehbare Muttern mit Innengewinde aufweist, die sich mit den Spindelgewinden der Säulen im Eingriff befinden. Der Laufholm verfügt über Nuten, in die die eigentlichen, nach vorn offenen Fügewerkzeuge eingeschoben werden können.

Zum Fügen eines Radsatzes werden bei dieser Radsatzpresse zunächst die Radsatzwelle und das zu fügende Bauteil mit Hilfe des Brückenkrans in die Vormontageposition gebracht. In dieser ist das zu fügende Bauteil auf die Radsatzwelle aufgeschoben und befindet sich in einer Position, von der aus es auf einen den Presssitz bildenden Umfangsbund aufgepresst werden kann. Die Radsatzwelle wird dann - an dem Brückenkran hängend - manuell derart ausgerichtet, dass ihre Längsmittelachse und die Längsmittelachse des Presszylinders zusammenfallen. Die Fixierung der Radsatzwelle in dieser Position erfolgt einerseits mittels einer an der Stirnfläche des Druckstempels des Hochdruckzylinders vorgesehenen Zentrierspitze, die abgefedert ist und in eine Zentrierbohrung der Radsatzwelle eingreift, andererseits mittels einer zweiten Zentrierspitze, die durch einen etwa an der Endtraverse befestigten Hydraulikzylinder bewegt werden kann. Vor dem Einspannen der Radsatzwelle wird der Laufholm so verfahren, dass sich das darin eingeschobene Werkzeug in Pressrichtung gesehen hinter dem zu fügenden Bauteil befindet.

Der eigentliche Pressvorgang erfolgt dann, indem durch Betätigung des Hochdruckzylinders die Radsatzwelle in Pressrichtung soweit verlagert wird, bis das sich an dem Werkzeug abstützende Bauteil auf der Radsatzwelle in der gewünschten Position befindet.

Zum Fügen eines weiteren Bauteils wird dann mittels des Brückenkranes die Radsatzwelle der Radpresse entnommen, im Falle des Aufpressens wird das nächste Bauteil in seine Vormontageposition gebracht, im Falle des Abpressens das gelockerte Bauteil entnommen. Anschließend wird das Werkzeug durch Rotation der mit Gewinde ausgestatteten Muttern in seine für den nächsten Pressvorgang erforderliche Position verlagert. Die Radsatzwelle mit den Bauteilen wird dann - wiederum mit Hilfe des Brückenkranes - vom Bedienpersonal in die bereits oben beschriebene Pressposition gebracht und der Fügevorgang erneut durchgeführt.

Bei einer anderen bekannten Radsatzpressen ist der eigentliche Presszylinder im Zylinderholm installiert, der z.B. über zwei Rundsäulen mit dem so genannten Laufholm verbunden ist, der die Funktion des Widerlagers übernimmt und der der Aufgabenstellung entsprechend längs verschiebbar auf den Säulen gelagert ist. Über rundnutartige Einstiche an den Säulen ist eine Verriegelung an mehreren Positionen möglich. Diese Grundform hat sich im Laufe der letzten hundert Jahre kaum verändert. Besonders in Nordamerika werden statt der Rundsäulen rechteckige Zuganker eingesetzt, in denen die Verriegelung über einen Bolzen erfolgt. Eine U-förmige Öffnung im Laufholm dient zur Aufnahme der Radsatzwelle.

Nachteilig ist bei den Vorrichtungen dieser Art, dass der Radsatz mehrfach mit Hilfe des Brückenkrans in die Radsatzpresse eingebracht und wieder entnommen werden muss, bis sämtliche Fügevorgänge abgeschlossen sind, da sich durch das hierzu benötigte Personal die Kosten für das Fügen von Radsätzen drastisch erhöhen. Darüber hinaus besteht für das Bedienpersonal aufgrund der manuellen Bestückung der Radsatzpresse mit teils tonnenschweren Bauteilen eine nicht zu unterschätzende Verletzungsgefahr.

Eine entscheidende Weiterentwicklung der traditionellen Grundform war die von der Anmelderin vorgestellte, vollautomatische Radsatzpresse gemäß EP 1 201 350 B1 von der die Erfindung als nächstliegendem Stand der Technik ausgeht. Die wesentliche Neuerung dieser Radsatzpresse war die, dass die U-förmige Öffnung im Laufholm so groß war, dass der Laufholm bei zwischen den Zentrierspitzen eingespanntem Radsatz über den gesamten Radsatz hinweg in alle Presspositionen gefahren werden konnte und zu diesem Zweck das eigentliche Presswerkzeug am Laufholmen quer zur Achsrichtung von einer Pressposition in eine Verfahrposition verlagert wurde. So konnten die Taktzeiten stark reduziert werden. Im Gegensatz zu traditionellen Lösungen muss jedoch die Weite der U-förmigen Öffnung im Laufholm stark vergrößert werden, um den Holm über alle Radsatzkomponenten hinweg fahren zu können. Der als Aufnahme für das eigentliche Presswerkzeug dienende, quer verfahrbare "Basiseinsatz" ist also deutlich größer als bei traditionellen Lösungen gestaltet. Ein oberer und ein unterer Verbindungsholm nehmen die Längskräfte zwischen den endseitigen Zylinderholmen auf, wobei der untere Verbindungsholm unter Flur angeordnet ist, so dass er mit seiner Oberseite Flur eben abschließt. In dem Laufholm sind Keile installiert, die in der jeweils gewünschten Pressposition in den unteren und oberen Verbindungsholm eingefahren werden, um den Laufholm in der Pressposition festzusetzen. Die Zylinder- oder Pressholmen und die sie oben und unten verbindenden Verbindungsholme sind jeweils eigenständige Bauteile höchst unterschiedlicher Bauart, die nach bekannten Fügeverfahren miteinander verbunden werden.

### ZUSAMMENFASSUNG DER ERFINDUNG

Der Erfindung liegt die Aufgabe zugrunde, bei einer Radsatzpresse die Vorteile einer nur einmaligen Einspannung für alle Fügeschritte eines Radsatzes mit den Kostenvorteilen der traditionellen Radsatzpressen zu verbinden. Zur Lösung dieser Aufgabe wird eine Radsatzpresse mit den Merkmalen des Anspruchs 1 vorgeschlagen. Demnach ist vorgesehen, bei einer gattungsgemäßen Radsatzpresse die Widerlager in den zwischen den Pressholmen fest angeordneten Verbindungssäulen als Schiebeführungen zur unmittelbaren Aufnahme und zum verschiebbaren Verlagern des mindestens einen Presswiderlagers von einer Stellung außerhalb des Pressbereiches in eine kippfreie Abstützstellung des mindestens einen Presswiderlagers für den Auf- oder Abpressvorgang auszubilden. Die Erfindung verzichtet also auf einen Laufholm mit U-förmiger Öffnung zur Aufnahme des Radsatzes. Stattdessen sind nur noch Presswiderlager registerartig in Schiebeführungen des Pressengestells einschiebbar. Um ein Presswiderlager in anderen Axialpositionen festzulegen, wird das Widerlager aus der Schiebeführung quer zur Achsrichtung heraus verfahren und danach in Achsrichtung in eine andere Arbeitsposition transportiert und dort wieder in eine andere Schiebeführung des Pressengestells eingefahren.

Durch die Erfindung wird eine außerordentlich kompakte Bauweise der Radsatzpresse möglich. Der lichte Abstand zwischen der oberen und unteren Verbindungssäule kann auf ein Maß reduziert werden, dass nur unwesentlich größer als der größte Durchmesser eines zu fügenden Radsatzes ist. Trotzdem werden alle Vorteile eines vollautomatischen, zügigen Arbeitsablaufes erreicht, wobei der Radsatz nur ein einziges Mal eingespannt werden muss.

Soweit von "Verbindungssäulen" die Rede ist, bedeutet dies im Sinne der Erfindung jede Art von Zugübertragungsmitteln zwischen den die Kolbenzylindereinheiten tragenden Pressholmen. Soweit die Aufnahme der Presswiderlager in den Schiebeführungen der Verbindungssäulen als "unmittelbar" bezeichnet wird, versteht sich hierunter im Sinne der Erfindung, dass auf einen während des Fügens zwischen den Verbindungssäulen und dem Presswiderlager wirksamen Laufholm verzichtet wird. Es bleibt also unbenommen, das mindestens eine Presswiderlager im Zusammenhang mit den Schiebeführungen mehrteilig auszubilden. Auch kann das Presswiderlager im Bereich der Pressstelle ein an das zu fügende Bauteil angepasstes Werkzeug aufnehmen.

Es ist nun auf verschiedene Weise möglich, die Erfindung auszuführen:

Ein besonders einfacher Aufbau der Radsatzpresse ergibt sich dann, wenn der Pressenrahmen (oder Maschinenständer) aus mindestens einem etwa O-förmigen Bauteil besteht, welches die Funktion der beiden Zylinderholm und der Verbindungssäulen übernimmt. Dies senkt die Aufwendungen für Fügeflächen und Bauteilverbindungen und mithin auch für die Maschinenmontage. Die Radsatzpresse wird dadurch sehr verwindungssteif und benötigt kein aufwendiges Ausrichten vor Ort. Die Bautiefe kann sehr gering gehalten werden, was die Zugänglichkeit für das Bedienpersonals und das Einsetzen und Entnehmen von Radsätzen erleichtert. Insbesondere können zwei plattenförmige O-förmige Bauteile in seitlichem Abstand von einander zu einem Rahmen vorgebbarer Dicke verbunden werden. Die Kolbenzylindereinheiten können dann in dem Abstandsraum zwischen den plattenartigen Bauteilen eingesetzt werden. Schiebeführungen ausreichender Länge können in diesem Fall in den Verbindungselementen zwischen den plattenförmigen Bauteilen vorgesehen sein.

Die Presswiderlager werden in der Fügeposition gegen Verschiebungen quer zur Radsatzwelle verriegelt.

Zum Verschieben der Presswiderlager quer zur Achsrichtung und zum Verfahren in eine andere Axialposition kann etwa ein einseitig am Pressengestell verfahrbarer Schlitten vorgesehen sein. Dieser kann, mit einem Präzisionsspindelantrieb, sehr exakt und schnell in die jeweilige Einschiebeposition für das mindestens eine Presswiderlager verfahren werden. Ebenso können Messanordnungen zum Überprüfen der Presspositionen an dem Pressenrahmen verfahren werden.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen, sowie aus der nachfolgenden Beschreibung der zugehörigen Zeichnung und Tabelle, in der - beispielhaft - ein Ausführungsbeispiel einer Radsatzpresse dargestellt ist.

### FIGURENKURZBESCHREIBUNG

In der Zeichnung zeigen
Fig. 1 eine Radsatzpresse in Seitenansicht; sowie
Fig. 2 dieselbe Radsatzpresse im Schnitt entlang der Linie II-II gemäß Fig. 1.

### DETAILLIERTE BESCHREIBUNG EINES AUSFÜHRUNGSBEISPIELS

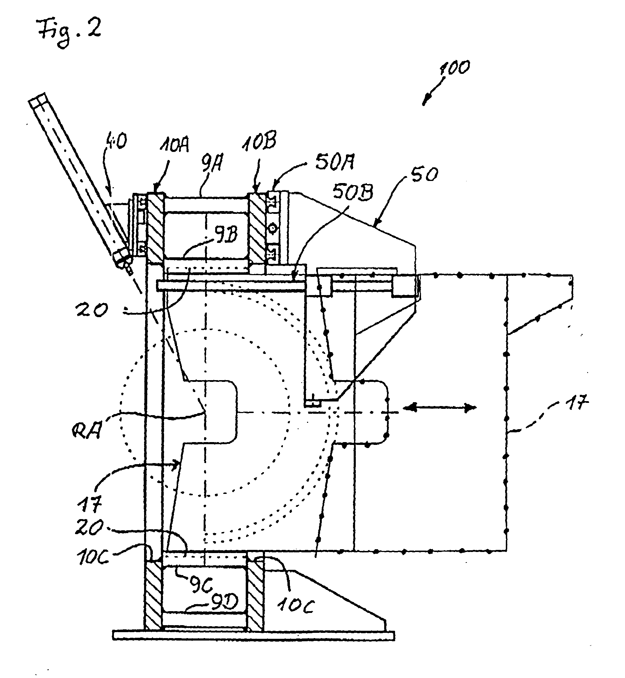

Die aus den Figuren ersichtliche Radsatzpresse 100 weist ein Pressengestell bestehend aus vertikalen Pressholmen 1 und 2 sowie horizontalen Verbindungssäulen 5 und 6 auf. Diese sind zusammengefasst zu zwei in Seitenansicht O-förmigen mit Abstand voneinander angeordneten Stahlplatten 10A, 10B. Zur deren Beabstandung und Verbindung dienen horizontale Verbindungselemente 9A bis 9D (Fig. 2). Diese geben Platz zur Anordnung von je einer Kolben/Zylindereinheit 3, 4 auf jeder Pressenseite, mit Zentrierspitzen 11 und 12, die aufeinander zu weisen, sowie Druckstempeln 7, 8.

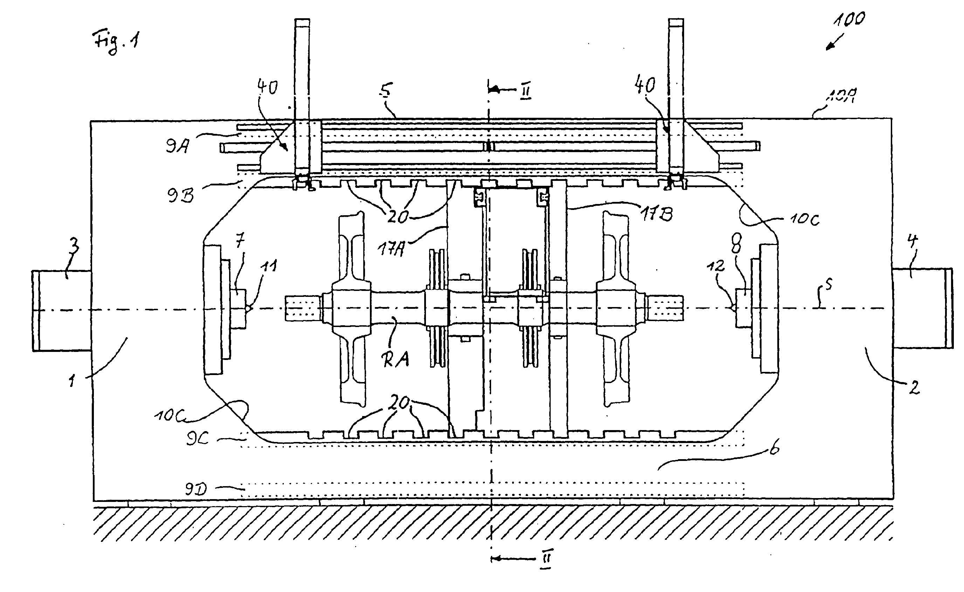

Die Radsatzpresse kann auf ebenem Grund aufgestellt und verankert werden. Auf der einen Seite der oberen Verbindungssäule 5 ist mit entsprechenden Längsführungen 50A und einem Spindelantrieb eine Schlittenanordnung 50 verfahrbar. Diese trägt eine oder mehrere Presswiderlager 17A, 17B in quer zur Radsatzwelle RA mittels Querführungen 50B verschiebbarer Weise. Dadurch können die Presswiderlager zwischen einer Arbeits- oder Fügeposition in eine Verfahrposition herausverlagert werden, wie in Figur 2 strichpunktiert angedeutet. Die der O-förmigen Öffnung 10C zugewandten Verbindungselemente 9B, 9C weisen nebeneinander beabstandete Schiebeführungen 20 auf, die sich quer zur Radsatzwelle RA erstrecken und das Einschieben der Presswiderlager 17A, 17B in die Fügeposition sowie deren Herausziehen aus derselben quer zur Achsrichtung gestatten. Sie befinden sich vertikal übereinander und dienen als Widerlager in dem sich die Presswiderlager 17A, 17B abstützen. In Figur 1 sind zwei Presswiderlager in verschiedenen Axialpositionen ersichtlich.

Eine Messanordnung 40 ist der Schlittenanordnung gegenüberliegend an der oberen Verbindungssäule parallel zur Achsrichtung verfahrbar angeordnet.

Die Funktionsweise ist so, dass ein Radsatz in die Position zwischen den Zentrierspitzen hinein gefahren wird. Nach Übernahme des Radsatzes durch die Zentrierspitzen kann der ganze Radsatz mittels der Kolben/Zylindereinheiten 3, 4 axial verlagert werden. Wenn ein Widerlager 17A oder 17B sich in seiner Arbeitsposition befindet, wird der Auf- oder Abpressvorgang in an sich bekannter Weise bewirkt.

### Bezugszeichenliste:

- 1: Pressholm
- 2: Pressholm
- 3: Kolben/Zylindereinheit
- 4: Kolben/Zylindereinheit
- 5: Verbindungssäule
- 6: Verbindungssäule
- 7: Druckstempel
- 8: Druckstempel
- 9A-9D: Verbindungselemente
- 10A/B: O-förmige Platten
- 11: Zentrierspitze
- 12: Zentrierspitze
- 17A/B: Presswiderlager
- 20: Schiebeführungen
- 40: Messanordnung
- 50: Schlittenanordnung
- 50A: Längsführungen
- 50B: Querführungen
- 100: Radsatzpresse
- RA: Radsatzwelle
- S: Gerade

## Patentansprüche

1. Radsatzpresse (100) zum Auf- oder Abpressen von Rädern, Bremsscheiben oder dergleichen auf Radsatzwellen (RA) von Schienenfahrzeugen,
mit zwei auf einer gemeinsamen Gerade (S) feststehend angeordneten, gegeneinander gerichteten Kolbenzylindereinheiten (3, 4) zur Aufbringen des notwendigen Pressdrucks und, gegebenenfalls, zur Verlagerung der Radsatzwelle in Längsrichtung der Radsatzwelle zur Bewirkung des Auf- oder Abpressvorgangs, mit einer Einrichtung zur Aufnahme einer Radsatzwelle in der Radsatzpresse während des Pressvorganges, wie mit zwei einander gegenüberliegenden Zentrierspitzen (11, 12), wobei zur Übertragung der Presskraft auf das zugewandte Ende der Radsatzwelle Druckstempel (7, 8) an den Kolbenzylindereinheiten vorgesehen sind,
mit einem Presswiderlager (17A, 17B) zum Abstützen des Rades, einer Bremsscheibe oder dergleichen während des Pressvorganges, das derart ausgestaltet ist, dass es durch eine Relativbewegung zur Radsatzwelle quer zu deren Längsrichtung in seine Abstützstellung bringbar ist und sich ansonsten außerhalb des Pressbereiches befindet, wobei das mindestens eine Presswiderlager (17A, 17B) entlang der Radsatzwelle in verschiedenen Positionen festlegbar ist,
mit zwischen Pressholmen (1, 2) fest angeordneten, axial von einander beabstandete Widerlager tragenden Verbindungssäulen (5, 6)
**dadurch gekennzeichnet, dass**
die Widerlager als Schiebeführungen (20) zur unmittelbaren Aufnahme und zum verschiebbaren Verlagern des mindestens einen Presswiderlagers (17A, 17B) von einer Stellung außerhalb des Pressbereiches in eine kippfreie Abstützstellung des mindestens einen Presswiderlagers für den Auf- oder Abpressvorgang ausgebildet sind.

2. Radsatzpresse nach Anspruch 1, **dadurch gekennzeichnet, dass** das Pressengestell aus mindestens einem in Seitenansicht O-förmigen Bauteil (10A, 10B) besteht.

3. Radsatzpresse nach Anspruch 2, **dadurch gekennzeichnet, dass** zwei O-förmige Bauteile (10A, 10B) mittels Verbindungselementen (9A-9D) auf Abstand angeordnet und miteinander verbunden werden.

4. Radsatzpresse nach Anspruch 3, **dadurch gekennzeichnet, dass** die Schiebeführungen (20) an den Verbindungselementen (9B, 9C) vorgesehen sind.

5. Radsatzpresse nach einem der Ansprüche 1 bis 4, **gekennzeichnet durch** eine Schlittenanordnung (50) zum Einschieben der Presswiderlager (17A, 17B) in die Schiebeführungen (20) und zum Herausziehen aus demselben quer zur Achsrichtung sowie zum Verlagern der Presswiderlager in Achsrichtung.

6. Radsatzpresse nach einem der Ansprüche 1 bis 5, **gekennzeichnet durch** mindestens eine entlang einer der Verbindungssäulen verfahrbare Messanordnung (40).

## Claims

1. Wheelset press (100) for pressing wheels, brake discs and the like onto and off wheelset axles (RA) of railway vehicles, having two piston-and-cylinder units (3, 4) for applying the pressure required for pressing and, when required, for displacing the wheelset axle in its longitudinal direction to effect the pressing-on or pressing-off operation, which piston-and-cylinder units (3, 4) are arranged in fixed positions on a common straight line (S) and are directed towards one another, having an arrangement for holding a wheelset axle in the wheelset press during the pressing operation, such as by means of two locating centres (11, 12) which are situated opposite one another, there being provided on the piston-and-cylinder units pressure-applying rams (7, 8) for transmitting the pressing force to the adjacent ends of the wheelset axle, having an abutment for pressing (17A, 17B), for supporting the wheel, a brake-disc or the like during the pressing operation, which is so designed that it can be brought to its supporting position by a movement relative to the wheelset axle transversely to the longitudinal direction thereof and which is otherwise situated clear of the region in which pressing takes place, the at least one abutment for pressing (17A, 17B) being able to be locked in place in various positions along the wheelset axle, and having connecting bars (5, 6) which are fixed in position between press end-beams (1, 2) and which carry abutment means which are spaced apart from one another, **characterised in that** the abutment means take the form of guides for sliding movement (20) for the direct reception of the at least one abutment for pressing (17A, 17B) and for the slidable displacement thereof from a position clear of the region in which pressing takes place to a position in which the at least one abutment for pressing is in a non-tilting supporting position for the pressing-on or pressing-off operation.

2. Wheelset press according to claim 1, **characterised in that** the frame of the press comprises at least one component (10A, 10B) which is O-shaped when seen from the side.

3. Wheelset press according to claim 2, **characterised in that** two O-shaped components (10A, 10B) are arranged at a distance and are connected together by means of connecting members (9A-9D).

4. Wheelset press according to claim 3, **characterised in that** the guides for sliding movement (20) are provided in the connecting members (9B, 9C).

5. Wheelset press according to one of claims 1 to 4, **characterised by** a slider arrangement (50) for sliding the abutments for pressing (17A, 17B) into the guides for sliding movement (20), and for withdrawing them from the same, transversely to the axial direction, and for displacing the abutments for pressing in the axial direction.

6. Wheelset press according to one of claims 1 to 5, **characterised by** at least one measuring arrangement (40) which is displaceable along one of the connecting bars.

## Revendications

1. Presse à essieu (100) pour poser ou déposer des roues, des disques de frein ou analogues d'un essieu (RA) de véhicules ferroviaires comprenant :
- deux dispositifs pistons/cylindres (3,4) dirigés l'un vers l'autre et installés de manière fixe sur une ligne droite commune (S), * les dispositifs pistons/cylindres permettant d'exercer la puissance de compression requise et le cas échéant déplacer l'essieu dans sa direction longitudinale pour réaliser l'opération de pose ou de dépose,
- un dispositif recevant l'essieu dans la presse à essieu au cours de l'opération de mise en pression de façon que deux points de centrage (11, 12) disposés de manière opposée, où se trouvent des pistons de pression (7, 8), soient prévus sur les vérins pistons/cylindres pour transmettre la puissance de poussée sur l'extrémité faciale de l'essieu,
- une butée de poussée (17A, 17B) portant une roue, un disque de frein ou un moyen analogue au cours de l'opération de poussée et conçue de façon à pouvoir être transférée dans sa position de support par le mouvement relatif de l'essieu, transversalement à sa direction longitudinale ou une autre zone de poussée située à l'extérieur, pouvant comporter au moins une butée de poussée (17A, 17B), fixée dans différentes positions le long de l'essieu, et
- des colonnes de liaison (5, 6) prévues rigidement entre les poutres de presse (1, 2) et portant des butées espacées axialement l'une de l'autre,
presse **caractérisée en ce que**
des butées sont réalisées sous la forme de chemins de coulissement (20) recevant directement et transférant de manière mobile au moins l'une des butées de presse (17A, 17B) d'une position extérieure à la zone de poussée dans une position d'appui sans basculement d'au moins une butée de presse pour l'opération de pose ou de dépose.

2. Presse d'essieu selon le préambule de la revendication 1, en particulier selon la revendication 1,
**caractérisée en ce que**
le châssis de presse comprend au moins un composant (10A, 10B) ayant une forme de O en vue de côté.

3. Presse d'essieu selon la revendication 2,
**caractérisée en ce que**
deux composants en forme de O (10A, 10B) sont espacés l'un de l'autre et sont reliés l'un à l'autre par des éléments de liaison (9A, 9D).

4. Presse d'essieu selon la revendication 3,
**caractérisée en ce que**
les chemins de coulissement (20) sont prévus sur les éléments de liaison (9B, 9C).

5. Presse d'essieu selon l'une des revendications 1 à 4,
**caractérisée par**
un chariot (50) pour insérer les butées de presse (17A, 17B) dans les chemins de coulissement (20) et pour dégager les butées de presse transversalement à la direction axiale ainsi que pour déplacer les butées de presse dans la direction axiale.

6. Presse d'essieu selon l'une des revendications 1 à 5,
**caractérisée par**
au moins un moyen de mesure (40) mobile le long d'une colonne de liaison.
